# EUROPEAN PATENT SPECIFICATION

(11) **EP 4 573 544 B1**
(45) Date of publication and mention of the grant of the patent: **09.12.2026**
(21) Application number: 22800520.3
(22) Date of filing: 05.10.2022
(51) Int. Cl.: G10L 17/04, G10L 17/18

(54) **ACCELERATING SPEAKER DIARIZATION WITH MULTI-STAGE CLUSTERING**
BESCHLEUNIGUNG DER SPRECHERDIARISIERUNG MIT MEHRSTUFIGEM CLUSTERING
ACCÉLÉRATION DE LA BINARISATION DE HAUT-PARLEUR AVEC GROUPEMENT À ÉTAGES MULTIPLES

(43) Date of publication of application: 25.06.2025
(73) Proprietor: Google LLC, Mountain View, CA 94043 (US)
(72) Inventor: WANG, Quan, Mountain View, California 94043 (US); HUANG, Yiling, Mountain View, California 94043 (US); LU, Han, Mountain View, California 94043 (US); ZHAO, Guanlong, Mountain View, California 94043 (US)
(74) Representative: Shipp, Nicholas
(86) International application number: PCT/US2022/077636
(87) International publication number: WO 2024/076365

(56) References cited:
- NING HUAZHONG ET AL: "A spectral clustering approach to speaker diarization", INTERSPEECH 2006, 17 September 2006 (2006-09-17), ISCA, XP093025367, Retrieved from the Internet <URL:http://www.ifp.illinois.edu/~hning2/papers/Ning_spectral.pdf> DOI: 10.21437/Interspeech.2006-566
- TIN LAY NWE ET AL: "Speaker Clustering and Cluster Purification Methods for RT07 and RT09 Evaluation Meeting Data", IEEE TRANSACTIONS ON AUDIO, SPEECH AND LANGUAGE PROCESSING, IEEE, US, vol. 20, no. 2, 1 February 2012 (2012-02-01), pages 461 - 473, XP011398127, ISSN: 1558-7916, DOI: 10.1109/TASL.2011.2159203
- TIN LAY NWE ET AL: "Speaker diarization in meeting audio", ACOUSTICS, SPEECH AND SIGNAL PROCESSING, 2009. ICASSP 2009. IEEE INTERNATIONAL CONFERENCE ON, IEEE, PISCATAWAY, NJ, USA, 19 April 2009 (2009-04-19), pages 4073 - 4076, XP031460169, ISBN: 978-1-4244-2353-8

## Description

### TECHNICAL FIELD

This disclosure relates to accelerating speaker diarization with multi-stage clustering.

### BACKGROUND

Speaker diarization is the process of partitioning an input audio stream into homogenous segments according to speaker identity. In an environment with multiple speakers, speaker diarization answers the question *"who is speaking when"* and has a variety of applications including multimedia information retrieval, speaker turn analysis, audio processing, and automatic transcription of conversational speech to name a few. For example, speaker diarization involves the task of annotating speaker turns in a conversation by identifying that a first segment of an input audio stream is attributable to a first human speaker (without particularly identifying who the first human speaker is), a second segment of the input audio stream is attributable to a different second human speaker (without particularly identifying who the second human speaker is), a third segment of the input audio stream is attributable to the first human speaker, etc.

An exemplary approach for speaker diarization is described in Ning, Huazhong et al.: "A spectral clustering approach to speaker diarization", INTERSPEECH 2006, 17 September 2006 (2006-09-17), DOI: 10.21437/Interspeech.2006-566.

### SUMMARY

One aspect of the disclosure provides a computer-implemented method that when executed on data processing hardware causes the data processing hardware to perform operations for accelerating speaker diarization. The operations include receiving an input audio signal corresponding to utterances spoken by one or more speakers and processing, using a speech recognition model, the input audio signal to jointly generate as output from the speech recognition model: a transcription of the utterances; and one or more speaker turn tokens each indicating a location of a respective speaker turn detected in the transcription between a respective pair of adjacent terms. The input audio signal include N fixed-length audio frames. The operations also include segmenting the input audio signal in to a plurality of N speaker segments based on the one or more speaker turn tokens generated as output from the speech recognition model, and for each speaker segment of the plurality of N speaker segments, extracting a corresponding speaker-discriminative embedding from the speaker segment. Based on determining that a number of the N speaker segments is greater than a threshold number M, the operations also include performing pre-clustering on the speaker-discriminative embeddings extracted from N speaker segments to cluster the N speaker segments into a target number of pre-clusters, determining a respective centroid value based on the speaker-discriminative embeddings extracted from the speaker segments clustered into the corresponding pre-cluster for each corresponding pre-cluster in the target number of pre-clusters, performing spectral clustering on the centroid values determined for the target number of pre-clusters to cluster the centroid values into k classes, and assigning a respective speaker label to each centroid value clustered into the respective class that is different than the respective speaker label assigned to the centroid values clustered into each other class of the k classes for each respective class of the k classes.

Implementations of this aspect include one or more of the following optional features. In some implementations, the operations further include annotating the transcription of the utterances based on the speaker label assigned to each centroid value. In additional implementations, the operations also include setting the target number of pre-clusters equal to the threshold number M. The target number of pre-clusters may be less than the number of N speaker segments.

In some examples, the operations also include predicting a respective confidence value of the respective speaker turn detected in the transcription for each speaker turn token in of the one or more speaker turn tokens generated as output from the speech recognition model and determining a threshold number of the one or more speaker tokens each having the respective confidence value satisfying a confidence value threshold is satisfied. Here, segmenting the input audio signal in to the plurality of N speaker segments is based on determining the threshold number of the one or more speaker tokens each having the respective confidence value satisfying the confidence value threshold is satisfied. In these examples, the operations may further include determining pairwise constraints based on the confidence values predicted for the speaker turn tokens, wherein the spectral clustering performed on the centroid values determined for the target number of pre-clusters is constrained by the pairwise constraints.

In some implementations, each speaker turn token in the sequence of speaker turn tokens has a corresponding timestamp and segmenting the input audio signal into the plurality of N speaker segments based on the sequence of speaker turn tokens includes segmenting the input audio signal into initial speaker segments each bounded by the corresponding timestamps of a respective pair of adjacent speaker turn tokens in the sequence of speaker turn tokens. In these implementations, the operations may further include further segmenting the initial speaker segment into two or more reduced-duration speaker segments having respective durations less than or equal to the segment duration threshold for each initial speaker segment having a respective duration that exceeds a segment duration threshold, wherein the plurality of N speaker segments segmented from the input audio signal include the initial speaker segments having respective durations less than or equal to the segment duration threshold and the reduced-duration speaker segments further segmented from any of the initial speaker segments having respective durations that exceed the segment duration threshold.

Extracting the corresponding speaker-discriminative embedding from the speaker segment may include receiving, as input to a speaker encoder model, the speaker segment and generating, as output from the speaker encoder model, the corresponding speaker-discriminative embedding. The speaker encoder model may include a long-short term memory-based (LSTM-based) speaker encoder model configured to extract the corresponding speaker-discriminative embedding from each speaker segment.

In some implementations, the speech recognition model includes a streaming transducer-based speech recognition model that includes an audio encoder, a label encoder, and a joint network. The audio encoder is configured to receive, as input, a sequence of acoustic frames and generate, at each of a plurality of time steps, a higher order feature representation for a corresponding acoustic frame in the sequence of acoustic frames. The label encoder is configured to receive, as input, a sequence of non-blank symbols output by a final softmax layer and generate, at each of the plurality of time steps, a dense representation. The joint network is configured to receive, as input, the higher order feature representation generated by the audio encoder at each of the plurality of time steps and the dense representation generated by the label encoder at each of the plurality of time steps and generate, at each of the plurality of time steps, a probability distribution over possible speech recognition hypotheses at the corresponding time step. In these implementations, the audio encoder may include a neural network having a plurality of multi-head attention layers and/or the label encoder may include a bigram embedding lookup decoder model.

The speech recognition model may be trained on training samples that each include training utterances spoken by two or more different speakers paired with a corresponding ground-truth transcription of the training utterances, each ground-truth transcription injected with ground-truth speaker turn tokens indicating locations where speaker turns occur in the ground-truth transcription. The corresponding ground-truth transcription of each training sample may not be annotated with any timestamp information.

Another aspect of the present disclosure includes a system that includes data processing hardware and memory hardware in communication with the data processing hardware and storing instructions, that when executed by the data processing hardware, cause the data processing hardware to perform operations. The operations include receiving an input audio signal corresponding to utterances spoken by one or more speakers and processing, using a speech recognition model, the input audio signal to jointly generate as output from the speech recognition model: a transcription of the utterances; and one or more speaker turn tokens each indicating a location of a respective speaker turn detected in the transcription between a respective pair of adjacent terms. The input audio signal include N fixed-length audio frames. The operations also include segmenting the input audio signal in to a plurality of N speaker segments based on the one or more speaker turn tokens generated as output from the speech recognition model, and for each speaker segment of the plurality of N speaker segments, extracting a corresponding speaker-discriminative embedding from the speaker segment. Based on determining that a number of the N speaker segments is greater than a threshold number M, the operations also include performing pre-clustering on the speaker-discriminative embeddings extracted from N speaker segments to cluster the N speaker segments into a target number of pre-clusters, determining a respective centroid value based on the speaker-discriminative embeddings extracted from the speaker segments clustered into the corresponding pre-cluster for each corresponding pre-cluster in the target number of pre-clusters, performing spectral clustering on the centroid values determined for the target number of pre-clusters to cluster the centroid values into k classes, and assigning a respective speaker label to each centroid value clustered into the respective class that is different than the respective speaker label assigned to the centroid values clustered into each other class of the k classes for each respective class of the k classes.

This aspect may include one or more of the following optional features. In some implementations, the operations further include annotating the transcription of the utterances based on the speaker label assigned to each centroid value. In additional implementations, the operations also include setting the target number of pre-clusters equal to the threshold number M. The target number of pre-clusters may be less than the number of N speaker segments.

In some examples, the operations also include predicting a respective confidence value of the respective speaker turn detected in the transcription for each speaker turn token in of the one or more speaker turn tokens generated as output from the speech recognition model and determining a threshold number of the one or more speaker tokens each having the respective confidence value satisfying a confidence value threshold is satisfied. Here, segmenting the input audio signal in to the plurality of N speaker segments is based on determining the threshold number of the one or more speaker tokens each having the respective confidence value satisfying the confidence value threshold is satisfied. In these examples, the operations may further include determining pairwise constraints based on the confidence values predicted for the speaker turn tokens, wherein the spectral clustering performed on the centroid values determined for the target number of pre-clusters is constrained by the pairwise constraints.

In some implementations, each speaker turn token in the sequence of speaker turn tokens has a corresponding timestamp and segmenting the input audio signal into the plurality of N speaker segments based on the sequence of speaker turn tokens includes segmenting the input audio signal into initial speaker segments each bounded by the corresponding timestamps of a respective pair of adjacent speaker turn tokens in the sequence of speaker turn tokens. In these implementations, the operations may further include further segmenting the initial speaker segment into two or more reduced-duration speaker segments having respective durations less than or equal to the segment duration threshold for each initial speaker segment having a respective duration that exceeds a segment duration threshold, wherein the plurality of N speaker segments segmented from the input audio signal include the initial speaker segments having respective durations less than or equal to the segment duration threshold and the reduced-duration speaker segments further segmented from any of the initial speaker segments having respective durations that exceed the segment duration threshold.

Extracting the corresponding speaker-discriminative embedding from the speaker segment may include receiving, as input to a speaker encoder model, the speaker segment and generating, as output from the speaker encoder model, the corresponding speaker-discriminative embedding. The speaker encoder model may include a long-short term memory-based (LSTM-based) speaker encoder model configured to extract the corresponding speaker-discriminative embedding from each speaker segment.

In some implementations, the speech recognition model includes a streaming transducer-based speech recognition model that includes an audio encoder, a label encoder, and a joint network. The audio encoder is configured to receive, as input, a sequence of acoustic frames and generate, at each of a plurality of time steps, a higher order feature representation for a corresponding acoustic frame in the sequence of acoustic frames. The label encoder is configured to receive, as input, a sequence of non-blank symbols output by a final softmax layer and generate, at each of the plurality of time steps, a dense representation. The joint network is configured to receive, as input, the higher order feature representation generated by the audio encoder at each of the plurality of time steps and the dense representation generated by the label encoder at each of the plurality of time steps and generate, at each of the plurality of time steps, a probability distribution over possible speech recognition hypotheses at the corresponding time step. In these implementations, the audio encoder may include a neural network having a plurality of multi-head attention layers and/or the label encoder may include a bigram embedding lookup decoder model.

The speech recognition model may be trained on training samples that each include training utterances spoken by two or more different speakers paired with a corresponding ground-truth transcription of the training utterances, each ground-truth transcription injected with ground-truth speaker turn tokens indicating locations where speaker turns occur in the ground-truth transcription. The corresponding ground-truth transcription of each training sample may not be annotated with any timestamp information.

The details of one or more implementations of the disclosure are set forth in the accompanying drawings and the description below. Other aspects, features, and advantages will be apparent from the description and drawings, and from the claims.

### DESCRIPTION OF DRAWINGS

FIG. 1 is a schematic view an example speaker diarization system for performing speaker diarization.
FIG. 2 is a schematic view of an example transcription output from a speech recognition model that includes speaker turn tokens indicating locations of predicted speaker turns in the transcription.
FIG. 3 is a schematic view of an example automatic speech recognition model with a transducer-based architecture.
FIG. 4 is a schematic view of an example cluster selector of the speaker diarization system of FIG. 1.
FIG. 5 is a flowchart of an example arrangement of operations for a computer-implemented method of performing speaker diarization on an input audio signal containing utterances of speech spoken by multiple different speakers.
FIG. 6 is a schematic view of an example computing device that may be used to implement the systems and methods described herein.

Like reference symbols in the various drawings indicate like elements.

### DETAILED DESCRIPTION

Automatic speech recognition (ASR) systems generally rely on speech processing algorithms that assume only one speaker is present in a given input audio signal. An input audio signal that includes a presence of multiple speakers can potentially disrupt these speech processing algorithms, thereby leading to inaccurate speech recognition results output by the ASR systems. These ASR systems include a speaker diarization system to answer the question of *"who is speaking when. "* As such, speaker diarization is the process of segmenting speech from multiple speakers engaged in a larger conversation to not specifically determine who is talking (speaker recognition/identification), but rather, determine when someone is speaking. Put another way, speaker diarization includes a series of speaker recognition tasks with short utterances and determines whether two segments of a given conversation were spoken by the same individual or different individuals, and is repeated for all segments of the conversation. Accordingly, speaker diarization detects speaker turns from a conversation that includes multiple speakers. As used herein the term 'speaker turn' refers to the transition from one individual speaking to a different individual speaking in a larger conversation.

Existing speaker diarization systems generally include multiple relatively independent components, such as, without limitation, a speech segmentation module, an embedding extraction module, and a clustering module. The speech segmentation module is generally configured to remove non-speech parts from an input utterance and divide the entire input utterance into fixed-length segments and/or word-length segments. Although dividing the input utterance into fixed-length segments is easy to implement, often times it is difficult to find a good segment length. That is, long fixed-length segments may include several speaker turns, while short segments include insufficient speaker information. Moreover, ASR models that generate word-length segments are usually spoken by a single speaker, however, individual words also include insufficient speaker information. The embedding extraction module is configured to extract, from each segment, a corresponding speaker-discriminative embedding. The speaker-discriminative embedding may include i-vectors or d-vectors.

The clustering modules employed by the existing speaker diarization systems are tasked with determining the number of speakers present in the input utterance and assign speaker identities (e.g., labels) to each segment. These clustering modules may use popular clustering algorithms that include Gaussian mixture models, Naive clustering, Links clustering, agglomerative hierarchical clustering (AHC), and spectral clustering. Speaker diarization systems may also use an additional re-segmentation module for further refining the diarization results output from the clustering module by enforcing additional constraints. The clustering module may execute online clustering algorithms that often have low quality or offline clustering algorithms that can only return diarization results at an end of an entire input sequence. In some examples, to achieve both high quality while minimizing latency, clustering algorithms are run offline in an online fashion. For instance, responsive to receiving each speaker-discriminative embedding, the clustering algorithm runs offline on the entire sequence of all existing embeddings. Implementing these examples, however, can be very computationally expensive if the sequence of speaker-discriminative embeddings is long.

For unsupervised speaker diarization systems, in which the number of different speakers in input audio is unknown, state-of-the-art spectral clustering algorithms are very computationally expensive to implement in production applications when the sequence of speaker-discriminative embeddings extracted from corresponding audio segments is large. For instance, assuming there are N speaker segments each having a corresponding speaker-discriminative embedding extracted therefrom, spectral clustering algorithms require computation of a Laplacian matrix of an N*N affinity matrix and performing eigen-decomposition on the computed Laplacian matrix. As both the Laplacian matrix and the eigen-decomposition have computational complexity of ~O(N^{2.7}), the computational complexity is generally not acceptable for performing spectral clustering to diarize long-form audio since the number of N speaker segments will be large. Long-form audio may include, but is not limited to, meeting audio recordings, podcasts, and videos.

By contrast, when the sequence of speaker-discriminative embeddings extracted from corresponding audio segments is small, spectral clustering will produce results with reduced-quality relative to other types of clustering algorithms since there is not sufficient information to perform graph-cut techniques required by spectral clustering. Moreover, since spectral clustering uses eigen-gap criterion to ultimiately determine a number of clusters, the criterion only works well if there is prior knowledge that there are at least two speakers captured in the input audio data. That is, if it is unknown whether there are at least two speakers, spectral clustering often predicts a wrong number of speakers.

Implementations herein are directed toward accelerating speaker diarization performance on a speaker diarization system that includes a speech recognition model that performs both speech recognition and speaker turn detection (i.e., when the active speaker changes) on received utterances spoken by multiple speakers. The speaker diarization system segments the utterances into speaker segments based on detected speaker turns and extracts speaker-discriminative embeddings therefrom. Advantageously, each speaker segment segmented from the utterances based on speaker turn detection include continuous speech from a speaker that carries sufficient information to extract robust speaker-discriminative embeddings.

For long-form audio characterized by a large number N of the speaker segments exceeding a threshold, implementations herein are specifically directed toward reducing computational cost of performing spectral clustering on the speaker-discriminative embeddings by first performing pre-clustering on the speaker-discriminative embeddings extracted from the number N of speaker segments to cluster the speaker segments into a target number of M pre-clusters. Thereafter, the speaker diarization system determines a respective centroid value for each corresponding pre-cluster in the target number of M pre-clusters based on the speaker-discriminative embeddings extracted from the speaker segments clustered into the corresponding pre-cluster, and then performs spectral clustering on the centroid values determined for the target number of M pre-clusters. Here, the target number of M pre-clusters is less than the number of N speaker segments, thereby bounding the computational cost to the value of M specified for the target number of pre-clusters independent of the actual number of N speaker segments each having a corresponding speaker embedding extracted therefrom. Advantageously, the value of M may be manually specified based on computational resource availability for an application running the speaker diarization system. For instance, larger values of M may be specified for server-side applications while smaller values of M may be specified for on-device applications where computational budget is smaller. Thus, as the number of speaker turns (i.e., number of speaker changes) is usually much smaller than the number of fixed-length segments and the speaker speaker-discriminative embeddings are only extracted from the speaker segments which are bounded by the speaker turns.

After performing the pre-clustering, the speaker diarization system performs spectral clustering on the centroid values determined for the target number of M pre-clusters to cluster the centroid values into k classes, and for each respective class of the k classes, the speaker diarization system assigns a respective speaker label to each centroid value clustered into the respective class that is different than the respective speaker label assigned to the centroid values clustered into each other class of the k classes. Based on the pre-clustering information indicating which pre-clusters of the target number of M pre-clusters contain which speaker segments among the number N of speaker segments, the speaker diarization system may map the speaker labels assigned to the M centroid values back to the number N of speaker segments and annotate the transcription of the utterances based on the speaker labels now assigned to each speaker segment. For instance, a transcription of a conversation between multiple speakers may be indexed by speaker to associated portions of the transcription with the respective speaker for identifying what portions each speaker said in the transcription.

Notably, when the number N of the speaker segments does not exceed the threshold, the speaker diarization system may bypass pre-clustering and perform spectral clustering on the speaker-discriminative embeddings extracted from the number N of speaker segments to cluster the plurality of speaker segments into k classes. Here, for each respective class of the k classes, the speaker diarization system assigns a respective speaker label to each speaker segment clustered into the respective class that is different than the respective speaker label assigned to the speaker segments clustered into each other class of the k classes.

As an additional measure contributing toward the reduction of computational cost in performing spectral clustering, the number of speaker turns (i.e., number of speaker changes) is usually much smaller than a number of fixed-length audio segments additionally input to the speaker diarization system. In other words, computational costs for executing pre-clustering algorithms and/or spectral clustering algorithms are reduced since speaker-discriminative embeddings are only extracted from the speaker segments which are bounded by the speaker turns. Advantageously, since the turn-wise speaker-discriminative embeddings are sparsely extracted from speaker segments (i.e., only after speaker turns), the sequence of all existing speaker-discriminative embeddings is relatively short even for relatively long conversations (i.e., multiple hours).

Moreover, training time is drastically reduced since a human annotator is not required to assign accurate timestamps to speaker turns and manually identify different speakers across these turns. Annotating time stamps and identifying speakers across turns is a time consuming process that may take about two hours for a single annotator to annotate 10 minutes of audio for one pass. Instead, the speech recognition model is trained to detect speaker turns from the semantic information conveyed in the speech recognition results such that each detected speaker turn is associated with a corresponding timestamp known by the speech recognition model. As such, these timestamps are not annotated by a human and can be used to segment the training audio data into corresponding speaker segments.

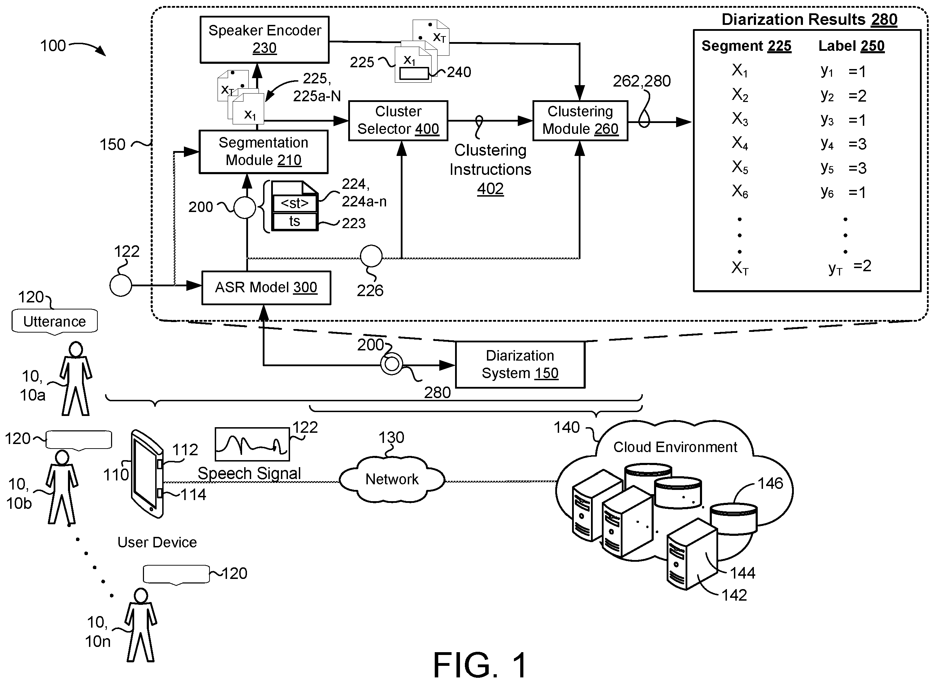

Referring to FIG. 1, a system 100 includes a user device 110 capturing speech utterances 120 from a group of speakers (e.g., users) 10, 10a-n and communicating with a cloud computing environment 140 via a network 130. The cloud computing environment 140 may be a distributed system having scalable/elastic resources 142. The resources 142 include computing resources 142 (e.g., data processing hardware) and/or storage resources 146 (e.g., memory hardware). In some implementations, the user device 110 and/or the cloud computing environment 140 executes a diarization system 150 that is configured to receive an input audio signal (i.e., audio data) 122 that corresponds to the captured utterances 120 from the multiple speakers 10. The diarization system 150 processes the input audio signal 122 and generates a transcription 200 of the captured utterances 120 and one or more speaker turn tokens 224, 224a-n. The speaker turn tokens 224 indicate a speaker turn (e.g., speaker change) detected in the transcription 200 between a respective pair of adjacent terms. Using the one or more speaker turn tokens 224, the diarization system 150 segments the input audio signal 122 into a plurality of N speaker segments 225, 225a-N each associated with a corresponding speaker discriminative embedding 240 extracted therefrom. Thereafter, the diarization system 150 generates diarization results 280 based on the speaker-discriminative embeddings 240 and pairwise constraints 226. The diarization results 280 include a corresponding speaker label 250 assigned to each speaker segment 225.

The user device 110 includes data processing hardware 112 and memory hardware 114. The user device 110 may include an audio capture device (e.g., microphone) for capturing and converting the utterances 120 from the speakers 10 into the audio data 122 (e.g., electrical signals). In some implementations, the data processing hardware 112 is configured to execute a portion of the diarization system 150 locally while a remaining portion of the diarization system 150 executes on the cloud computing environment 140. Alternatively, the data processing hardware 112 may execute the diarization system 150 in lieu of executing the diarization system 150 on the cloud computing environment 140. The user device 110 can be any computing device capable of communicating with the cloud computing environment 140 through the network 130. The user device 110 includes, but is not limited to, desktop computing devices and mobile computing devices, such as laptops, tablets, smart phones, smart speakers/displays, smart appliances, internet-of-things (IoT) devices, and wearable computing devices (e.g., headsets and/or watches).

While the present disclosure generally depicts the audio data 122 characterizing speech captured in real time between one or more speakers, the audio data 122 may be derived from recorded media content and streaming media content. For instance, the audio data 122 may be derived from any audio and/or audio-visual source such as broadcasted content (e.g., television programming), podcasts, web-based audio-visual content, pre-recorded audio and/or audio-visual content such as a recording of a conference call between two or more participants, and streaming audio and/or audio-visual content captured in real time during, for example, a conference call between two or more participants.

In the example shown, the speakers 10 and the user devices 110 may be located within an environment (e.g., a room) where the user device 110 is configured to capture and covert speech utterances 120 spoken by the speakers 10 into the input audio signal 122 (also referred to as audio data 122). For instance, the speakers may correspond to co-workers having a conversation during a meeting and the user device 110 may record and convert the speech utterances into the input audio signal 122. In turn, the user device 110 may provide the input audio signal 122 to the diarization system 150 for predicting which speaker 10 is speaking for each segment of speech. Thus, the diarization system 150 is tasked with processing the input audio signal 122 to determine when someone is speaking without specifically determining who is talking via speaker recognition/identification.

In some examples, at least a portion of the utterances 120 conveyed in the input audio signal 122 are overlapping such that at a given instant in time, voices of two or more of the speakers 10 are active. Notably, a number of the multiple speakers 10 may be unknown when the input audio signal 122 is provided as input to the diarization system 150 and the diarization system may predict the number of the multiple speakers 10. In some implementations, the user device 110 is remotely located from the speakers 10. For instance, the user device may include a remote device (e.g., a network server) that captures speech utterances 120 from speakers that are participants in a phone call or video conference. In this scenario, each speaker 10 (or group of multiple speakers 10) would speak into their own device (e.g., phone, radio, computer, smartwatch, etc.) that captures and provides the speech utterances 120 to the remote user device 110 for converting the speech utterances 120 into the audio data 122. Of course in this scenario, the utterances 120 may undergo processing at each of the user devices and be converted into corresponding input audio signals 122 that are transmitted to the remote user device 110 which may additionally process the input audio signal 122 provided as input to the diarization system 150.

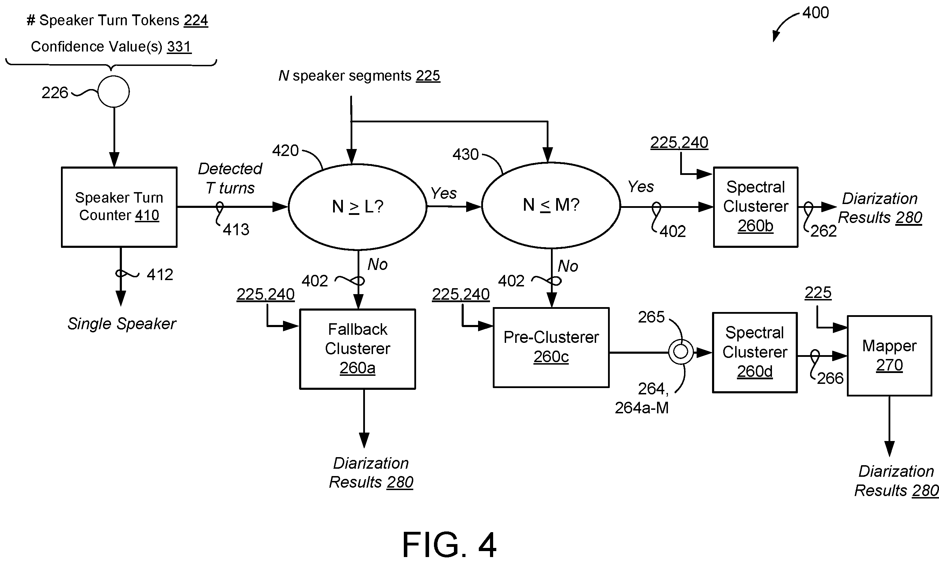

In the example shown, the diarization system 150 includes an ASR model 300, a segmentation module 210, a speaker encoder 230, a cluster selector 400, and a clustering module 260. Described in greater detail below with reference to FIG. 4, the clustering module 260 may execute a fallback cluster algorithm 260a, a spectral clusterer algorithm 260b, and a pre-clusterer algorithm 260c. The ASR model 300 is configured to receive the input audio signal 122 and process the input audio signal 122 to jointly generate a transcription 200 of the utterances 120 and a sequence of speaker turn tokens 224, 224a-n. The ASR model 300 may include a streaming ASR model 300 that jointly generates the transcriptions 200 and the speaker turn tokens 224 in a streaming fashion as the input audio signal 122 is received. The transcription 200 includes the sequence of speaker turn tokens 224 that indicates a location of a respective speaker turn detected in the transcription 200 between a respective pair of adjacent terms. For example, the utterance 120 may include "hello how are you I am good" and the ASR model 300 generates the transcription 200 "hello how are you <st> I am good." In this example, <st> represents a speaker turn token 224 indicating the speaker turn between the adjacent terms 'you' and 'I.' Each speaker turn token 224 in the sequence of speaker turn tokens 224 may also include a corresponding timestamp 223.

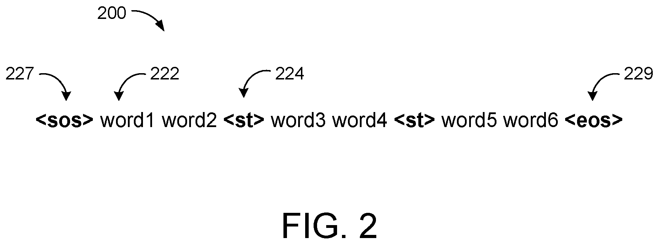

FIG. 2 shows an example transcription 200 of the utterances 120 characterized by the input audio signal 122 and the sequence of speaker turn tokens 224 output from the ASR model 300 of FIG. 1. The transcription 200 includes one or more terms 222 corresponding to words spoken by the one or more speakers. The sequence of speaker turn tokens 224 indicates a location of a respective speaker turn detected in the transcription 200 between a respective pair of adjacent terms 222. In the example shown, the input audio signal 122 may include an utterance where first and second terms 222 were spoken by a first speaker 10, third and fourth terms 222 were spoken by a second speaker 10, and fifth and sixth terms 222 were spoken by a third speaker. Here, the ASR model 300 generates a first speaker token 224 between the second term 222 and the third term 222 to indicate the speaker turn from the first speaker to the second speaker, and a second speaker token 224 between the fourth term 222 and fifth term 222 to indicate the speaker turn from the second speaker to the third speaker. Moreover, in some examples, the ASR model 300 generates a start of speech (SOS) token 227 that indicates the start of an utterance and an end of speech (EOS) token 229 that indicates the end of an utterance.

In some implementations, the ASR model 300 processes acoustic information and/or semantic information to detect speaker turns in the input audio signal 122. That is, using natural language understanding (NLU) the ASR model 300 can determine for an utterance "How are you I'm good," that "how are you" and "I'm good" were likely spoken by different users independent of any acoustic processing of the input audio signal 122. This semantic interpretation of the transcription 200 may be used independently or in conjunction with acoustic processing of the input audio signal 122.

Optionally, the ASR model 300 may utilize the diarization results 280 for improving speech recognition on the audio data 122. For instance, the ASR model 300 may apply different speech recognition models (e.g., language models, prosody models) for different speakers identified from the diarization results 280. Additionally or alternatively, the ASR model 300 and/or the diarization system 150 (or some other component) may index the transcription 200 of the audio data 122 using the speaker labels 250 of each speaker segment 225. For instance, a transcription of a conversation between multiple co-workers (e.g., speakers 10) during a business meeting may be indexed by speaker to associate portions of the transcription 200 with the respective speaker 10 for identifying what each speaker said.

The ASR model 300 may include any transducer-based architecture including, but not limited to, transformer-transducer (T-T), recurrent neural network transducer (RNN-T), and/or conformer-transducer (C-T). The ASR model 300 is trained on training samples that each include training utterances spoken by two or more different speakers 10 paired with a corresponding ground-truth transcription of the training utterances. Each ground-truth transcription is injected with ground-truth speaker turn tokens that indicate locations where speaker turns occur in the ground-truth transcription. Here, the corresponding ground-truth transcription of each training sample is not annotated with any timestamp information.

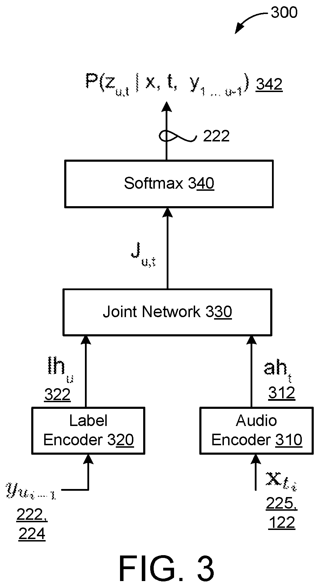

With reference to FIG. 3, the ASR model 300 may provide end-to-end (E2E) speech recognition by integrating acoustic, pronunciation, and language models into a single neural network, and does not require a lexicon or a separate text normalization component. Various structures and optimization mechanisms can provide increased accuracy and reduced model training time. The ASR model 300 may include a steaming Transformer-Transducer (T-T) model architecture, which adheres to latency constraints associated with interactive applications. The ASR model 300 may similarly include a RNN-T model architecture or a Conformer-Transducer (C-T) model architecture. In addition to the T-T and C-T model architectures, the ASR model 300 may include other types of Transducer model architectures having an audio encoder 310 that includes a plurality of multi-headed attention layers. The ASR model 300 provides a small computational footprint and utilizes less memory requirements than conventional ASR architectures, making the T-T model architecture suitable for performing speech recognition entirely on the user device 110 (e.g., no communication with the cloud computing environment 140 is required). The ASR model 300 includes an audio encoder 310, a label encoder 320, and a joint network 330. The audio encoder 310, which is roughly analogous to an acoustic model (AM) in a traditional ASR system, includes a neural network having a plurality of transformer layers. For instance, the audio encoder 310 reads a sequence of d-dimensional feature vectors (e.g., speaker segments 225 (FIG. 1) x = (*x₁, x₂,* . . ., *x_{T}*), where ${x}_{t} ∈ {ℝ}_{d}$, and produces at each time step a higher-order feature representation 312. Here, each speaker segment 225 (FIG. 1) includes a sequence of acoustic frames (e.g., audio data 122) that corresponds to the respective speaker segment 225 (FIG. 1). This higher-order feature representation is denoted as ah₁, ..., ah_{T}.

Similarly, the label encoder 320 may also include a neural network of transformer layers or a look-up table embedding model, which, like a language model (LM), processes the sequence of non-blank symbols output by a final Softmax layer 340 so far, *y₀*, *. .* ., *yᵤᵢ₋₁,* (e.g., the one or more terms 222 including speaker turn tokens 224 as shown in FIG. 2) into a dense representation 322 (denoted by Ihᵤ) that encodes predicted label history. In implementations when the label encoder 320 includes the neural network of transformer layers, each transformer layer may include a normalization layer, a masked multi-head attention layer with relative position encoding, a residual connection, a feed forward layer, and a dropout layer. In these implementations, the label encoder 320 may include two transformer layers. In implementations when the label encoder 320 includes the look-up table embedding model with a bi-gram label context, the embedding model is configured to learn a weight vector of the *d*-dimension for each possible bigram label context, where *d* is the dimension of the outputs of the audio and label encoders 310, 320. In some examples, the total number of parameters in the embedding model is *N²* x *d* where *N* is the vocabulary size of the labels. Here, the learned weight vector is then used as the embedding of the bigram label context in the ASR model 300 to produce fast label encoder 320 runtimes.

Finally, with the T-T model architecture, the representations produced by the audio and label encoders 310, 320 are combined by the joint network 330 using a dense layer J_{u,t}. The joint network 330 then predicts *P*(*z_{u,t}* |*x,t,y₁, . . ., yᵤ₋₁*)*,* which is a distribution over the next output symbol. Stated differently, the joint network 330 generates, at each output step (e.g., time step), a probability distribution over possible speech recognition hypotheses 342 for the one or more terms 222 of the transcription 200 (FIG. 2). Here, the "possible speech recognition hypotheses" correspond to a set of output labels (also referred to as "speech units") each representing a grapheme (e.g., symbol/character), term 222 (FIG. 2), or a word piece in a specified natural language. For example, when the natural language is English, the set of output labels may include twenty-seven (27) symbols, e.g., one label for each of the 26-letters in the English alphabet and one label designating a space. Accordingly, the joint network 330 may output a set of values indicative of the likelihood of occurrence of each of a predetermined set of output labels. This set of values can be a vector (e.g., a one-hot vector) and can indicate a probability distribution over the set of output labels. In some cases, the output labels are graphemes (e.g., individual characters, and potentially punctuation and other symbols), but the set of output labels is not so limited. For example, the set of output labels can include wordpieces and/or entire words, in addition to or instead of graphemes. The output distribution of the joint network 330 can include a posterior probability value for each of the different output labels. Thus, if there are 100 different output labels representing different graphemes or other symbols, the output *z_{u,t}* of the joint network 330 can include 100 different probability values, one for each output label. The probability distribution can then be used to select and assign scores to candidate orthographic elements (e.g., graphemes, wordpieces, and/or words) in a beam search process (e.g., by the Softmax layer 340) for determining the transcription.

The Softmax layer 340 may employ any technique to select the output label/symbol with the highest probability in the distribution as the next output symbol predicted by the ASR model 300 at the corresponding output step. In this manner, the ASR model 300 does not make a conditional independence assumption, rather the prediction of each symbol is conditioned not only on the acoustics but also on the sequence of labels output so far.

Referring back to the speaker diarization system 150 of FIG. 1, the segmentation module 210 is configured to receive the audio data 122 corresponding to the speech utterance 120 (also referred to as 'utterance of speech') and segment the audio data 122 into the plurality of N speaker segments 225, 225a-N. The segmentation module 210 receives the audio data 122 and the transcription 200 that includes the sequence of speaker turn tokens 224 with the corresponding timestamps 223 to segment the audio data 122 into the plurality of N speaker segments 225. Here, each speaker segment 225 corresponds to audio data between two adjacent speaker turn tokens 224. Optionally, the segmentation module 210 may further remove non-speech parts from the audio data 122, (e.g., by applying a voice activity detector). In some examples, the segmentation module 210 further segments speaker segments 225 that exceed a segment duration threshold, described in greater detail below.

The segmentation module 210 segments the input audio signal 122 into the plurality of N speaker segments 225 by segmenting the input audio signal 122 into initial speaker segments 225 each bounded by the corresponding timestamps 223 of a respective pair of adjacent speaker turn tokens 224. For example, the input audio signal 122 may include fifteen seconds of audio with the sequence speaker turn tokens 224 having timestamps 223 at three seconds, six seconds, and fourteen seconds. In this instance, the segmentation module 210 segments the input audio signal into three initial speaker segments 225 bounded by the speaker turn tokens 224 with timestamps 223 at three seconds, six seconds, and fourteen seconds.

In some implementations, one or more of the initial speaker segments 225 have a respective duration that exceeds a segment duration threshold. In these implementations, the segmentation module 210 further segments initial speaker segments 225 into two or more reduced-duration speaker segments 225 that have respective durations less than or equal to the segment duration threshold. Continuing with the above example, the segmentation module may determine the initial speaker segment 225 bounded by the speaker turn tokens 224 timestamped at six seconds and fourteen seconds (e.g., having a duration of eight seconds) exceeds a segment duration threshold of six seconds. In this scenario, the segmentation module 210 may further segment the initial speaker segment 225 into two or more reduced-duration speaker segments 225 having respective durations less than or equal to the segment duration threshold. Here, the segmentation module 210 may segment the eight second initial speaker segment 225 into a first reduced-duration speaker segment 225 that has a duration of six seconds and a second reduced-duration speaker segment 225 that has a duration of two seconds. Accordingly, the plurality of speaker segments 225 segmented from the input audio signal 122 may include both the initial speaker segments 225 having respective durations less than or equal to the segment duration threshold and the reduced-duration speaker segments 225 further segmented from any of the initial speaker segments 225 having respective durations that exceed the segment duration threshold.

The speaker encoder 230 is configured to receive the plurality of speaker segments 225 and, for each speaker segment 225 of the plurality of speaker segments 225, extract a corresponding speaker-discriminative embedding 240 from the speaker segment 225 as output. Thereafter, the speaker encoder provides an observation sequence of embeddings X = (x₁, x₂, . . ., x_{T}) to the clustering module 260, where entry x_{T} in the sequence represents a real-valued speaker-discriminative embedding 240 associated with a corresponding speaker segment 225 in the audio data 122 of the original utterance 120. The speaker-discriminative embeddings 240 may include speaker vectors such as d-vectors or i-vectors.

In some examples, the speaker encoder 230 includes a text-independent speaker encoder model trained with a generalized end-to-end extended-set softmax loss. The speaker encoder may include a long-short term memory-based (LSTM-based) speaker encoder model configured to extract the corresponding speaker-discriminative embedding 240 from each speaker segment 225. In particular, speaker encoder 230 includes (3) long short-term memory (LSTM) layers with 768 nodes and a projection size of 256. Here, the output of the last LSTM is transformed to a final 256-dimension d-vector. In some configurations, the final dimension of the speaker-discriminative embeddings 240 output from the speaker encoder 230 are reduced to 64-dimension in order to speed up affinity matrix computations performed by the clustering module 260.

In some implementations, each speaker turn token 224 in the sequence of speaker turn tokens 224 resets the LSTM states of the speaker encoder 230 such that the speaker-discriminative embeddings 240 do not include information from other speaker segments 225. For instance, the speaker encoder 230 may only extract a speaker-discriminative embedding 240 corresponding to a portion of the speaker segment 225. Accordingly, the speaker-discriminative embedding 240 includes sufficient information from the speaker segment 225, but is not too close to the speaker turn boundary such that the speaker-discriminative embedding 240 may include inaccurate information or contain overlapping speech from another speaker 10.

Based on the pairwise constraints 226, indicating a total number of the speaker turn tokens 224 and a respective confidence value 331 (FIG. 4) for each speaker turn token 224, and the total number N of the plurality of N speaker segments 225, the cluster selector 400 determines clustering instructions 402 that instruct the clustering module 260 how to cluster the observation sequence of embeddings X. For instance, when there is not at least a threshold number of the one or more speaker turn tokens having respective confidence values satisfying a confidence value threshold, the cluster selector 400 may simply output a single speaker indication 412 indicating that there is no need for performing speaker diarization, and thus, provide clustering instructions 402 that instruct the clustering module 260 to not execute any clustering algorithms on the observation sequence of embeddings X. Otherwise, and described in greater detail below with reference to FIG. 4, when the cluster selector 402 determines that the threshold number of the one or more speaker tokens each having the respective confidence value satisfying the confidence value threshold is satisfied, the cluster selector 402 provides clustering instructions 402 based on the number of the N speaker segments 225 that instruct the clustering module 260 to execute at least one of a fallback clustering algorithm 260a, a spectral clustering algorithm 260b, 260d, or a pre-clustering algorithm 260c for generating the diarization results 280.

FIG. 4 shows a schematic view of the cluster selector 400 depicting a process flow for determining the clustering instructions 402 based on the pairwise constraints 226 and the total number N of the plurality of N speaker segments 225. Initially, a speaker turn counter 410 receives the pairwise constraints 226 that indicate the total number of the speaker turn tokens 224 and a respective confidence value 331 (FIG. 4) for each speaker turn token 224. The speaker turn counter 410 determines whether there at least a threshold number of speaker turn tokens 224 having respective confidence values 331 satisfying the confidence threshold value. In some examples, the threshold number of speaker turn tokens is equal to one (1). The threshold number of speaker turn tokens may include any integer greater than one in other examples. The threshold number may be manually selected and changed. Similarly, the confidence value threshold may be adjusted to change the sensitivity. When the speaker turn counter 410 determines that there is not at least the threshold number of speaker turn tokens 224 having respective confidence values 331 satisfying the confidence threshold value, the speaker turn counter 410 outputs the single speaker indication 412 ("*Single Speaker*") indicating that only a single speaker is predicted to be present in the input audio signal. In this case, clustering module 260 is instructed to not execute any clustering algorithms for diarizing the input audio signal 120. On the other hand, then the speaker turn counter 410 determines that there is at least the threshold number of speaker turn tokens 224 having respective confidence values 331 satisfying the confidence threshold value (i.e., indicating there at least two different speakers), the speaker turn counter 410 outputs a multiple speaker indication 413 ("*Detected T turns*") that causes the cluster selector 400 to evaluate the total number N of the plurality of N speaker segments 225 for determining the clustering instructions 402.

At decision step 420, the cluster selector 400 determines whether the number of the plurality of N speaker segments 225 is greater than or equal to a minimum threshold number L. When the cluster selector 400 determines that the number of the plurality of N speaker segments is less than the minimum threshold number L (i.e., decision step 420 is "No"), the cluster selector 400 determines clustering instructions 402 that instruct the clustering module 260 to execute the fallback clusterer algorithm 260a for clustering the observation sequence of embeddings X (i.e., N speaker embeddings 240) to obtain the diarization results 280 (FIG. 1). The fallback clustering algorithm 260 does not perform spectral clustering, and instead performs another type of clustering algorithm that is more suitable for clustering the observation sequence of embeddings when the number of N speaker segments 225 is small (e.g., N<L). The fall back clustering algorithm may require that a threshold parameter be specified on a similarity score for clustering. Notably, properly selecting the threshold parameter on the similarity score may result in the fallback clustering algorithm 260a significantly outperforming spectral clustering when the number of N speaker segments 225 is small. The fallback clustering algorithm 260a may include a Naive clustering algorithm. The fallback clustering algorithm 260a may include a Links clustering algorithm. The fallback clustering algorithm 260a may include an agglomerative hierarchical clustering (AHC) algorithm.

Conversely, when the cluster selector 400 determines the number of the plurality of N speaker segments 225 is greater than or equal to a minimum threshold number L (i.e., decision step 420 is "Yes"), the cluster selector 400 proceeds to decision step 430 to determine whether the number of the plurality of N speaker segments 225 is less than or equal to a maximum threshold number M. When the cluster selector 400 determines that the number of the plurality of N speaker segments 225 is less than or equal to the maximum threshold number M (i.e., decision step 430 is "Yes"), the cluster selector 400 determines clustering instructions 402 that instruct the clustering module 260 to execute the spectral clustering algorithm 260b, and thus, perform spectral clustering on the speaker-discriminative embeddings 240 extracted from the plurality of N speaker segments to cluster the plurality of N speaker segments into k classes 262. The k classes 262 represents the predicted number of active speakers included in the received utterance 120. Thereafter, for each respective class 262 of the k classes 262, the clustering module 260 assigns a respective speaker label 250 to each speaker segment 225 clustered into the respective class 262 that is different than the respective speaker label 250 assigned to the speaker segments 225 clustered into each other class 262 of the k classes 262. Here, the spectral clustering algorithm 260b receives the speaker-discriminative embeddings 240 for each speaker segment 225 and the pairwise constraints 226, and is configured to predict speaker labels 250 for each speaker-discriminative embedding 240. Simply put, the clustering module 260 executes the spectral clustering algorithm 260b to predict which speaker 10 spoke each speaker segment 225.

The clustering module 260 receives the speaker-discriminative embeddings 240 for each speaker segment 225 and the pairwise constraints 226, and is configured to predict speaker labels 250 for each speaker-discriminative embedding 240. Simply put, the clustering module 260 predicts which speaker 10 spoke each speaker segment 225. More specifically, the clustering module 260 performs spectral clustering on the speaker-discriminative embeddings 240 extracted from the plurality of speaker segments 225 to cluster the plurality of speaker segments 225 into k classes 262. The k classes 262 represents the predicted number of active speakers included in the received utterance 120. Thereafter, for each respective class 262 of the k classes 262, the clustering module 260 assigns a respective speaker label 250 to each speaker segment 225 clustered into the respective class 262 that is different than the respective speaker label 250 assigned to the speaker segments 225 clustered into each other class 262 of the k classes 262.

With reference to FIGS. 1 and 4, in some implementations, the diarization system 150 annotates the transcription 200 of the utterances 120 based on the speaker label 250 assigned to each speaker segment 225 (i.e., diarization results 280). For instance, a transcription 200 of a conversation between multiple speakers 10 may be indexed by speaker to associated portions of the transcription 200 with the respective speaker 10 for identifying what each speaker 10 said in the transcription 200. The annotated transcription 200 may be stored in memory hardware 114, 146 of the user device 110 or the cloud computing environment 140 to be accessed later by one of the speakers 10.

The pairwise constraints 226 generated by the ASR model 300 may further constrain the spectral clustering performed on the speaker-discriminative embeddings 240. In addition to the confidence value 331 for each speaker turn token 224, the pairwise constraints 226 may indicate contextual information about adjacent speaker segments 225. For instance, adjacent speaker segments 225 may include any combination of both speaker segments 225 having a duration less than the segment duration threshold, one speaker segment 225 having a duration less than the segment duration threshold and one speaker segment 225 having a reduced-duration (i.e., initial speaker segment exceeded segment duration threshold), or both speaker segments 225 having reduced-durations. The confidence value 331 of the respective speaker turn detected in the transcription 200 and the context information (collectively referred to as constraints 226), are used to further constrain the spectral clustering performed by the spectral clustering module 260 executing the spectral clustering algorithm 260b.

In some implementations, the clustering module 260 executes the spectral clustering algorithm 260a to perform spectral clustering on the speaker-discriminative embeddings 240 that are constrained by the pairwise constraints 226 received from the ASR model 300. For instance, when both adjacent speaker segments 225 have durations less than the segment duration threshold, spectral clustering is constrained to encourage speaker labels 250 to be different for adjacent speaker segments 225 separated by speaker turn tokens with a high confidence. In other instances, when both adjacent speaker segments 225 have reduced-durations, the spectral clustering is constrained to encourage speaker labels for adjacent speaker segments 225 to be the same. That is, because the adjacent reduced-duration speaker segments 225 were divided based on exceeding the segment duration threshold rather than a speaker turn token 224, there is a high likelihood that the adjacent reduced-duration speaker segments 225 are spoken by the same speaker 10. In some examples, when one speaker segment 225 having a duration less than the segment duration threshold is adjacent to another speaker segment 225 having a reduced-duration, the spectral clustering is constrained based on the confidence of the speaker turn token 224. Here, when the speaker turn token 224 has a high confidence value 331, the clustering module 260 is constrained to encourage different speaker labels 250. Alternatively, when the speaker turn token 224 has a low confidence value, the clustering module 260 may be constrained to encourage the same speaker label 250.

The spectral clustering algorithm 260b receives the speaker-discriminative embeddings 240 for each speaker segment 225 and the pairwise constraints 226, and is configured to predict speaker labels 250 for each speaker-discriminative embedding 240. Given a set of N data samples (e.g., x₁, x₂, . . ., x_{T}), the spectral clustering algorithm 260b constructs a similarity graph by computing pairwise similarities *aᵢⱼ* where A represents the $affinity matrix ∈ {ℝ}^{N \times N}$ of the similarity graph. Moreover, the affinity of two samples x*ᵢ* and x*ⱼ* may be represented by ${a}_{ij} = \frac{1}{2} \left(1+cos\left({x}_{i}, {x}_{j}\right)\right)$*.* The spectral clustering algorithm 260b identifies a partition so that edges connecting different clusters have low weights, and edges within a cluster have high weights. Generally, the similarity graph is connected or only includes a few connected components and very few isolated vertices. Spectral clustering is sensitive to quality and noises of the similarity graph, therefore, the spectral clustering algorithm 260b performs several refinement operations on the affinity matrix to model the local neighborhood relationships between data samples. One refinement operation includes row-wise thresholding with *p*-percentile that sets diagonal values of the affinity matrix to 0, sets affinity values that are larger than the p-percentile values to 1, multiply affinity values by 0.01 that are smaller than the p-percentile of the row, and resetting diagonal values of the affinity matrix to 1. Another refinement operation includes applying an average summarization operation to make the affinity matrix positive semi-definite using the following equation, $A ′ \frac{1}{2} \left(A+{A}^{T}\right)$. The diarization error rate (DER) is significantly affected by the hyper parameter *p* for the*p*-percentile. Accordingly, a ratio value *r(p)* is a good proxy of the DER such that maximum eigengap is large while not generating an excessive amount of connections in the similarity graph.

Given the affinity matrix A, an unnormalized Laplacian matrix L is defined by L = D - A while a normalized Laplacian matrix *L̅* is defined by *L̅* = D^{-1/2}LD^{-1/2}. Here, D represents the diagonal matrix defined as $\left\{{d}_{i}={\sum }_{j = 1}^{N} {a}_{ij}\right\}$*.* To perform spectral clustering, the spectral clustering algorithm 260b applies eigen-decomposition to estimate the number of k classes 262 using the maximum eigengap method. The spectral clustering algorithm 260b chooses the first class k 262 of eigen-vectors and applies a row-wise re-normalization of the spectral embeddings and applies k-means algorithm on the spectral embeddings to predict speaker labels 250.

In some examples, the spectral clustering algorithm 260b receives the pairwise constraints 226 indicating the confidence values 331 of the speaker turn tokens 224 and context information to constrain the spectral clustering. The pairwise constraints 226 are configured to encourage different speaker labels 250 for adjacent speaker segments 225 with a high confidence speaker turn token 224 and encourage the same speaker labels 250 for adjacent speaker segments 225 with a low confidence speaker turn token 224. With pairwise constraints 226 Q constrained spectral clustering identifies one or more partitions that maximize constraint satisfaction and minimizes the cost on the similarity graph G. The pairwise constraints 226 may be represented by $Q ∈ {ℝ}^{N \times N}$. The spectral clustering algorithm 260b processes the constraint matrix Q by: ${Q}_{\left(i, j\right)} \left\{\begin{matrix}+ 1 , \\ - 1 , \\ 0 ,\end{matrix} \begin{matrix}if \left(i, j\right) ∈ ML and c \left(\left〈st\right〉\right) > σ ; \\ if \left(i, j\right) ∈ CL ; \\ Otherwise .\end{matrix}\right.$ (1)

Here, if there is a speaker turn between speaker segment 225 i and i + 1, and the confidence of the speaker turn token c(<st>) is larger than a threshold *σ*, the spectral clustering algorithm 260b defines the adjacent speaker segments 225 as "cannot-link" (CL). The CL definition indicates that the speaker label 250 between the adjacent speaker segments 225 has a high likelihood of being different. If there is no speaker turn token 224 between adjacent speaker segments 225, the clustering module defines the adjacent speaker segments as "must-link" (ML). The ML definition indicates that the speaker label 250 between the adjacent speaker segments 225 has a high likelihood of being the same.

The ML defined adjacent speaker segments 225 are treated as a positive class and the CL defined adjacent speaker segments 225 as a negative class. The class labels (i.e., positive and negative), are propagated in vertical and horizontal directions respectively in the affinity matrix *A̅* = *D*^{-1/2}*AD*^{-1/2}. In each iteration *t,* the intial constraint matrix is added to adjust Q(t). Moreover, a parameter *α*, is used to control the relative amount of constraint information from adjacent speaker segments 225 and the initial constraints 226. The spectral clustering algorithm 260b preforms vertical propagation first until the convergence and then horizontal propagation by the following algorithm:

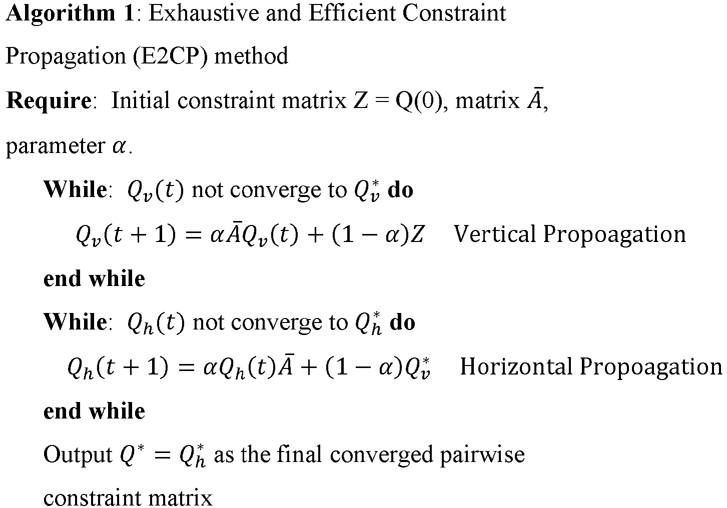

Q* has a closed-form solution formulated by: ${Q}^{∗} = {Q}_{h}^{∗} = \left(1-α\right) {Q}_{v}^{∗} {\left(I-α{\overline{A}}^{T}\right)}^{- 1} = {\left(1-α\right)}^{2} {\left(I-α\overline{A}\right)}^{- 1} Z {\left(I-α\overline{A}\right)}^{- 1}$ (2)

Using the propagated constraint matrix Q*, the spectral clustering algorithm 260b obtains an adjusted affinity matrix *Âᵢⱼ* by: ${\hat{A}}_{ij} = \left\{\begin{matrix}1 - \left(1-{Q}_{ij}^{∗}\right) \left(1-{A}_{ij}\right) , & If {Q}_{ij}^{∗} \geq 0 ; \\ \left(1+{Q}_{ij}^{∗}\right) {A}_{ij} , & If {Q}_{ij}^{∗} < 0 .\end{matrix}\right.$ (3)

For constraint *Qᵢⱼ* > 0, the affinity matrix increases the similarity between sample x*ᵢ* and x*ⱼ*. Alternatively, for *Qᵢⱼ* < 0, the affinity matrix decreases the similarity between x*ᵢ* and x*ⱼ*. After this operation, the spectral clustering algorithm 260b performs normalized Laplacian matrix based spectral clustering to predict speaker labels 250 for the speaker segments 225. The spectral clustering algorithm 260b generates diarization results 280 that may include a first speaker label 250a indicating the first speaker spoke a first speaker segment 225a (i.e., first and second terms 222 of the transcription 200 of FIG. 2), a second speaker label 250b that indicates the second speaker spoke a second speaker segment 225b (i.e., third and fourth terms 222 of the transcription of FIG. 2), and a third speaker label 250c that indicates the third speaker spoke a third speaker segment 225c (i.e., fifth and sixth terms 222 of the transcription 200 of FIG. 2).

With continued reference to FIG. 4, when the cluster selector 400 determines that the number of the plurality of N speaker segments 225 is greater than the maximum threshold number M (i.e., decision step 430 is "No"), the cluster selector 400 determines clustering instructions 402 that instruct the clustering module 260 to execute the pre-clustering algorithm 260c, and thus, cause the clustering module 260 to perform pre-clustering on the speaker-discriminative embeddings 240 extracted from N speaker segments 225 to cluster the N speaker segments 225 into a target number of pre-clusters 264, 264a-M. Here, the target number of pre-clusters is less than the number of the N speaker segments. In some examples, the target number of pre-clusters is set to equal the maximum threshold number M. The value of the maximum threshold number M may be manually set based on availability of computational resources. For instance, the maximum threshold number M may be set lower when the diarization system 150 executes on the user device 110 than when the diarization system 150 executes on the distributed system 140.

After the pre-clustering algorithm 260c clusters the N speaker segments 225 into a target number of pre-clusters 264, the clustering module determines a respective centroid value 265 for each corresponding pre-cluster 264 in the target number of M pre-clusters 264a-M based on the speaker-discriminative embeddings 240 extracted from the speaker segments 225 clustered into the corresponding pre-cluster 264. Thereafter, the clustering module 260 executes a spectral clustering algorithm 260d to perform spectral clustering on the M centroid values 265 determined for the target number of M pre-clusters 264 to cluster the centroid values 265 into k classes 266.

The k classes 266 represents the predicted number of active speakers included in the received utterance 120. Thereafter, for each respective class 266 of the k classes 262, the clustering module 260 assigns a respective speaker label 250 to each centroid value 265 clustered into the respective class 266 that is different than the respective speaker label 250 assigned to the centroid values 265 clustered into each other class of the k classes 266. Notably, by pre-clustering of the N speaker-discriminative embeddings 240 into the target number of M pre-clusters 264, the computational cost for executing the spectral clustering algorithm 260d is bound to the value of M specified for the target number of pre-clusters independent of total number of the N speaker segments 225 each having the corresponding speaker-discriminative embedding 240 extracted therefrom.

Based on the pre-clustering information indicating which pre-clusters 264 of the target number of M pre-clusters 264 contain which speaker segments 225 among the number N of speaker segments 225, a mapper 270 may map the speaker labels 225 assigned to the M centroid values 265 back to the number N of speaker segments 225 and annotate the transcription 200 of the utterances 120 based on the speaker labels 250 now assigned to each speaker segment 225. For instance, a transcription of a conversation between multiple speakers may be indexed by speaker to associated portions of the transcription with the respective speaker for identifying what portions each speaker said in the transcription.

Despite the use of pre-clustering to bound the computational cost for executing the spectral clustering algorithm 260d to the value of M specified for the target number of pre-clusters, the computational cost for executing the pre-clustering algorithm 260c itself may not be acceptable for very long audio files, such as audio files exceeding durations of multiple hours. In these scenarios, an upper bound U for the pre-clustering algorithm 260c may also be set, such that the first time N speaker-discriminative embeddings 240 is observed where N ≥ U, the pre-clustering algorithm 260c may be run to obtain and cache (e.g., in the memory hardware 114, 146) a target number of M pre-clusters 264 having the associated M centroid values 265 mapped back to the number N of speaker segments 225. Thereafter, once each new (N+1) speaker-discriminative embedding 240 is observed, the first N speaker-discriminative embeddings 240 are replaced by the cached M centroid values 264 and the pre-clustering algorithm 260c is run on M+1 embeddings that includes the M centroid values 264 and the new speaker-discriminative embedding 240. Upon having N' embeddings where M+(N'-N) ≥ U, the clustering algorithm 260c may be run on the M+(N'-N) to obtain and cache an updated target number of M pre-clusters 264 having the associated M centroid values 265 mapped back to the number N of speaker segments 225. Accordingly, by setting the upper bound U (i.e., based on available computational resources) for the pre-clustering algorithm 260c, the pre-clustering algorithm is never run on more than an upper bound number of U embeddings.

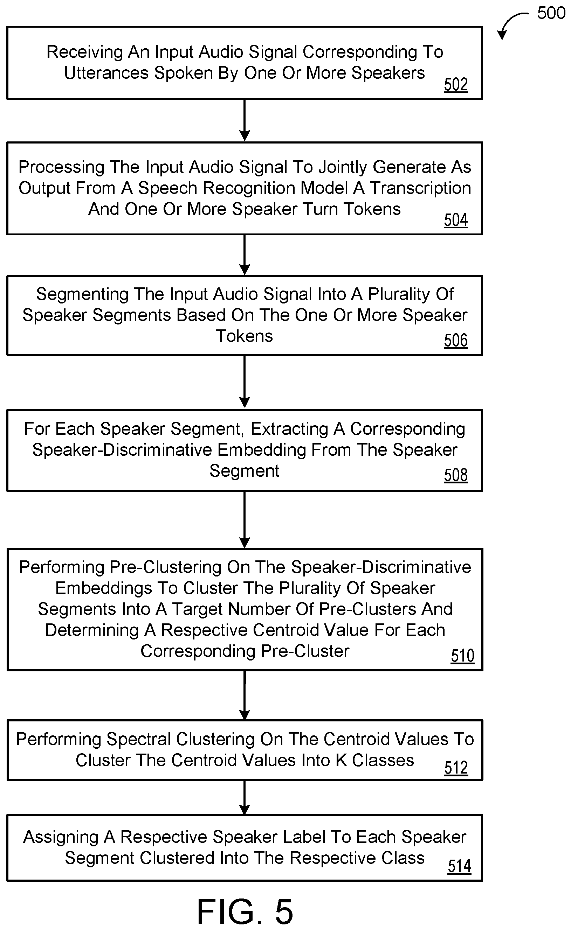

FIG. 5 is a flowchart of an exemplary arrangement of operations for a computer-implemented method 500 of performing speaker diarization on a received utterance 120 of speech. Data processing hardware 610, implementing either of the data processing hardware 112, 144 of FIG. 1, may execute the operations for the method 500 by executing instructions stored on memory hardware 620, implementing the memory hardware 114, 146 of FIG. 1. At operation 502, the method 500 includes receiving an input audio signal 122 corresponding to utterances 120 spoken one or more speakers 10, 10a-n. At operation 504, the method 500 includes processing, using a speech recognition model (e.g., ASR model) 300, the input audio signal 122 to jointly generate as output from the speech recognition model 300 a transcription 200 of the utterances 120 and one or more speaker turn tokens 224, 224a-n. Each speaker turn token 224 indicates a location of a respective speaker turn detected in the transcription 200 between a respective pair of adjacent terms 222.

At operation 506, the method 500 includes segmenting the input audio signal 122 into a plurality of N speaker segments 225 based on the one or more of the speaker tokens 224. At operation 508, the method 500 includes, for each speaker segment 225 of the plurality of N speaker segments 225, extracting a corresponding speaker-discriminative embedding 240 from the speaker segment 225.

Based on determining that the number of the N speaker segments 225 is greater than a threshold number M (e.g., the maximum threshold number M of decision step 430 of FIG. 4), the method 500 performs operations 510-514. At operation 510, the method 500 includes performing pre-clustering on the speaker-discriminative embeddings 240 extracted from N speaker segments 225 to cluster the N speaker segments into a target number of pre-clusters 264, 264a-M. Here, the target number of pre-clusters 264 is less than the number of N speaker segments. The target number of pre-clusters 264 may be equal to or less than the maximum threshold number M. At operation 510, the method 500 also includes determining a respective centroid value 265 for each corresponding pre-cluster 264.

At operation 512, the method 500 includes performing spectral clustering (e.g., by executing the spectral clustering algorithm 260d) on the centroid values 265 determined for the target number of pre-clusters 264 to cluster the centroid values 265 into k classes 266. At operation 514, for each respective class of the k classes 166, the method 500 includes assigning a respective speaker label 250 to each centroid value 265 clustered into the respective class that is different than the respective speaker label 250 assigned to the centroid values 265 clustered into each other class of the k classes 166. In some examples, the method further includes mapping the speaker labels 225 assigned to the M centroid values 265 back to the number N of speaker segments 225 and annotating the transcription 200 of the utterances 120 based on the speaker labels 250 now assigned to each speaker segment 225.

A software application (i.e., a software resource) may refer to computer software that causes a computing device to perform a task. In some examples, a software application may be referred to as an "application," an "app," or a "program." Example applications include, but are not limited to, system diagnostic applications, system management applications, system maintenance applications, word processing applications, spreadsheet applications, messaging applications, media streaming applications, social networking applications, and gaming applications.

The non-transitory memory may be physical devices used to store programs (e.g., sequences of instructions) or data (e.g., program state information) on a temporary or permanent basis for use by a computing device. The non-transitory memory may be volatile and/or non-volatile addressable semiconductor memory. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

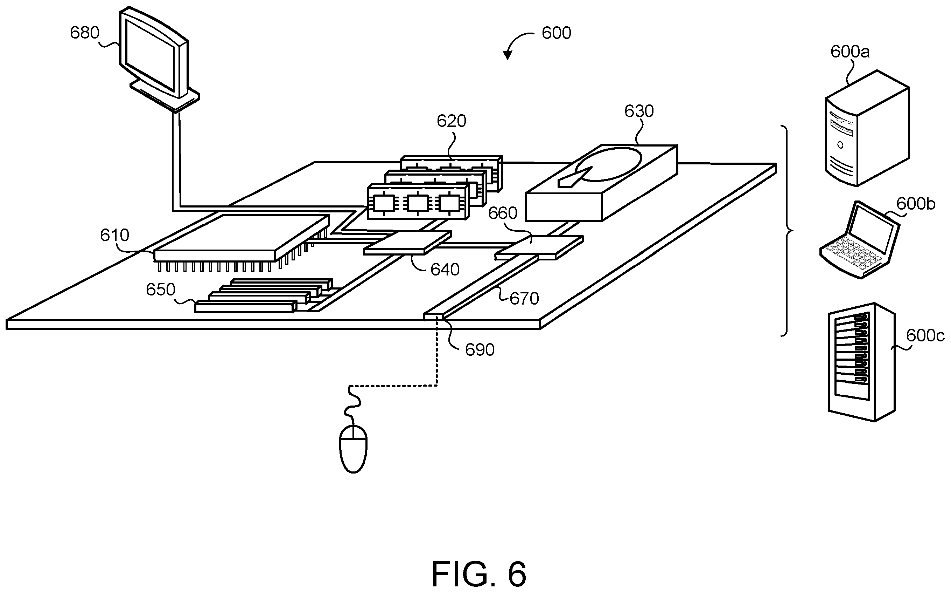

FIG. 6 is schematic view of an example computing device 600 that may be used to implement the systems and methods described in this document. The computing device 600 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the inventions described and/or claimed in this document.

The computing device 600 includes a processor 610, memory 620, a storage device 630, a high-speed interface/controller 640 connecting to the memory 620 and high-speed expansion ports 650, and a low speed interface/controller 660 connecting to a low speed bus 670 and a storage device 630. Each of the components 610, 620, 630, 640, 650, and 660, are interconnected using various busses, and may be mounted on a common motherboard or in other manners as appropriate. The processor 610 can process instructions for execution within the computing device 600, including instructions stored in the memory 620 or on the storage device 630 to display graphical information for a graphical user interface (GUI) on an external input/output device, such as display 680 coupled to high speed interface 640. In other implementations, multiple processors and/or multiple buses may be used, as appropriate, along with multiple memories and types of memory. Also, multiple computing devices 600 may be connected, with each device providing portions of the necessary operations (e.g., as a server bank, a group of blade servers, or a multi-processor system).

The memory 620 stores information non-transitorily within the computing device 600. The memory 620 may be a computer-readable medium, a volatile memory unit(s), or non-volatile memory unit(s). The non-transitory memory 620 may be physical devices used to store programs (e.g., sequences of instructions) or data (e.g., program state information) on a temporary or permanent basis for use by the computing device 600. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

The storage device 630 is capable of providing mass storage for the computing device 600. In some implementations, the storage device 630 is a computer-readable medium. In various different implementations, the storage device 630 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 620, the storage device 630, or memory on processor 610.

The high speed controller 640 manages bandwidth-intensive operations for the computing device 600, while the low speed controller 660 manages lower bandwidth-intensive operations. Such allocation of duties is exemplary only. In some implementations, the high-speed controller 640 is coupled to the memory 620, the display 680 (e.g., through a graphics processor or accelerator), and to the high-speed expansion ports 650, which may accept various expansion cards (not shown). In some implementations, the low-speed controller 660 is coupled to the storage device 630 and a low-speed expansion port 690. The low-speed expansion port 690, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 600 may be implemented in a number of different forms, as shown in the figure. For example, it may be implemented as a standard server 600a or multiple times in a group of such servers 600a, as a laptop computer 600b, or as part of a rack server system 600c.

Various implementations of the systems and techniques described herein can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, non-transitory computer readable medium, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The processes and logic flows described in this specification can be performed by one or more programmable processors, also referred to as data processing hardware, executing one or more computer programs to perform functions by operating on input data and generating output. The processes and logic flows can also be performed by special purpose logic circuitry, e.g., an FPGA (field programmable gate array) or an ASIC (application specific integrated circuit). Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

A number of implementations have been described. Nevertheless, it will be understood that various modifications may be made without departing from the scope of the disclosure.

## Claims

1. A computer-implemented method (500) when executed on data processing hardware (610) causes the data processing hardware (610) to perform operations comprising:
receiving an input audio signal (122) corresponding to utterances (120) spoken by one or more speakers, the input audio signal (122) comprising N fixed-length audio frames;
processing, using a speech recognition model, the input audio signal (122) to jointly generate as output from the speech recognition model:
a transcription (200) of the utterances (120); and
one or more speaker turn tokens (224) each indicating a location of a respective speaker turn detected in the transcription (200) between a respective pair of adjacent terms (222);
segmenting the input audio signal (122) into a plurality of N speaker segments (225) based on the one or more speaker turn tokens (224) generated as output from the speech recognition model;
for each speaker segment (225) of the plurality of N speaker segments (225), extracting a corresponding speaker-discriminative embedding from the speaker segment (225); and
based on determining that a number of the N speaker segments (225) is greater than a threshold number M:
performing pre-clustering on the speaker-discriminative embeddings extracted from N speaker segments (225) to cluster the N speaker segments (225) into a target number of pre-clusters;
for each corresponding pre-cluster in the target number of pre-clusters, determining a respective centroid value (265) based on the speaker-discriminative embeddings extracted from the speaker segments (225) clustered into the corresponding pre-cluster;
performing spectral clustering on the centroid values (265) determined for the target number of pre-clusters to cluster the centroid values (265) into k classes; and
for each respective class (262) of the k classes, assigning a respective speaker label (250) to each centroid value (265) clustered into the respective class (262) that is different than the respective speaker label (250) assigned to the centroid values (265) clustered into each other class (262) of the k classes.

2. The computer-implemented method (500) of claim 1, wherein the operations further comprise annotating the transcription (200) of the utterances (120) based on the speaker label (250) assigned to each centroid value (265).

3. The computer-implemented method (500) of claim 1 or 2, wherein the operations further comprise setting the target number of pre-clusters equal to the threshold number M.

4. The computer-implemented method (500) of any of claims 1-3, wherein the target number of pre-clusters is less than the number of N speaker segments (225).

5. The computer-implemented method (500) of any of claims 1-4, wherein the operations further comprise:
for each speaker turn token in of the one or more speaker turn tokens (224) generated as output from the speech recognition model, predicting a respective confidence value (331) of the respective speaker turn detected in the transcription (200); and
determining a threshold number of the one or more speaker tokens (224) each having the respective confidence value (331) satisfying a confidence value (331) threshold is satisfied,
wherein segmenting the input audio signal (122) in to the plurality of N speaker segments (225) is based on determining the threshold number of the one or more speaker tokens (224) each having the respective confidence value (331) satisfying the confidence value (331) threshold is satisfied.

6. The computer-implemented method (500) of claim 5, wherein the operations further comprise:
determining pairwise constraints (226) based on the confidence values (331) predicted for the speaker turn tokens (224),
wherein the spectral clustering performed on the centroid values (265) determined for the target number of pre-clusters is constrained by the pairwise constraints (226).

7. The computer-implemented method (500) of any of claims 1-6, wherein:
each speaker turn token in the sequence of speaker turn tokens (224) has a corresponding timestamp; and
segmenting the input audio signal (122) into the plurality of N speaker segments (225) based on the sequence of speaker turn tokens (224) comprises segmenting the input audio signal (122) into initial speaker segments (225) each bounded by the corresponding timestamps (223) of a respective pair of adjacent speaker turn tokens (224) in the sequence of speaker turn tokens (224).

8. The computer-implemented method (500) of claim 7, wherein the operations further comprise:
for each initial speaker segment (225) having a respective duration that exceeds a segment duration threshold, further segmenting the initial speaker segment (225) into two or more reduced-duration speaker segments (225) having respective durations less than or equal to the segment duration threshold,
wherein the plurality of N speaker segments (225) segmented from the input audio signal (122) comprise:
the initial speaker segments (225) having respective durations less than or equal to the segment duration threshold; and
the reduced-duration speaker segments (225) further segmented from any of the initial speaker segments (225) having respective durations that exceed the segment duration threshold.

9. The computer-implemented method (500) of any of claims 1-8, wherein extracting the corresponding speaker-discriminative embedding from the speaker segment (225) comprises:
receiving, as input to a speaker encoder model (230), the speaker segment (225); and
generating, as output from the speaker encoder model (230), the corresponding speaker-discriminative embedding.

10. The computer-implemented method (500) of claim 9, wherein the speaker encoder model (230) comprises a long-short term memory-based (LSTM-based) speaker encoder model (230) configured to extract the corresponding speaker-discriminative embedding from each speaker segment (225).

11. The computer-implemented method (500) of any of claims 1-10, wherein the speech recognition model comprises a streaming transducer-based speech recognition model comprising:
an audio encoder (310) configured to:
receive, as input, a sequence of acoustic frames; and
generate, at each of a plurality of time steps, a higher order feature representation for a corresponding acoustic frame in the sequence of acoustic frames;
a label encoder (320) configured to:
receive, as input, a sequence of non-blank symbols output by a final softmax layer (340); and
generate, at each of the plurality of time steps, a dense representation (322); and
a joint network (330) configured to:
receive, as input, the higher order feature representation generated by the audio encoder (310) at each of the plurality of time steps and the dense representation (322) generated by the label encoder (320) at each of the plurality of time steps; and
generate, at each of the plurality of time steps, a probability distribution over possible speech recognition hypotheses (342) at the corresponding time step.

12. The computer-implemented method (500) of claim 11, wherein the audio encoder (310) comprises a neural network having a plurality of multi-head attention layers.

13. The computer-implemented method (500) of claim 11 or 12, wherein the label encoder (320) comprises a bigram embedding lookup decoder model.

14. The computer-implemented method (500) of any of claims 1-13, wherein the speech recognition model is trained on training samples that each comprise training utterances (120) spoken by two or more different speakers paired with a corresponding ground-truth transcription (200) of the training utterances (120), each ground-truth transcription (200) injected with ground-truth speaker turn tokens (224) indicating locations where speaker turns occur in the ground-truth transcription (200); and optionally,
wherein the corresponding ground-truth transcription (200) of each training sample is not annotated with any timestamp information.

15. A system (100) comprising
data processing hardware (610);
memory hardware (620) in communication with the data processing hardware (610) and storing instructions, that when executed by the data processing hardware (610), cause the data processing hardware (610) to perform the method of any preceding claim.

## Patentansprüche

1. Computerimplementiertes Verfahren (500), das bei Ausführung auf Datenverarbeitungshardware (610) die Datenverarbeitungshardware (610) veranlasst, Operationen durchzuführen, umfassend:
Empfangen eines Eingangsaudiosignals (122), das Äußerungen (120) entspricht, die von einem oder mehreren Sprechern gesprochen werden, wobei das Eingangsaudiosignal (122) N Audioframes fester Länge umfasst;
Verarbeiten des Eingangsaudiosignals (122) unter Verwendung eines Spracherkennungsmodells, um gemeinsam als Ausgabe von dem Spracherkennungsmodell zu erzeugen:
eine Transkription (200) der Äußerungen (120); und
ein oder mehrere Sprecherwechseltoken (224), die jeweils eine Position eines jeweiligen Sprecherwechsels angeben, der in der Transkription (200) zwischen einem jeweiligen Paar von benachbarten Termen (222) detektiert wurde;
Segmentieren des Eingangsaudiosignals (122) in eine Mehrzahl von N Sprechersegmenten (225) basierend auf dem einen oder den mehreren Sprecherwechseltoken (224), die als Ausgabe von dem Spracherkennungsmodell erzeugt wurden;
für jedes Sprechersegment (225) der Mehrzahl von N Sprechersegmenten (225), Extrahieren einer entsprechenden sprecherdiskriminativen Einbettung aus dem Sprechersegment (225); und
basierend auf dem Bestimmen, dass eine Anzahl der N Sprechersegmente (225) größer als eine Schwellenwertanzahl M ist:
Durchführen von Vorclustern an den sprecherdiskriminativen Einbettungen, die aus N Sprechersegmenten (225) extrahiert wurden, um die N Sprechersegmente (225) in eine Zielanzahl von Vorclustern zu clustern;
für jeden entsprechenden Vorcluster in der Zielanzahl von Vorclustern, Bestimmen eines jeweiligen Schwerpunktwerts (265) basierend auf den sprecherdiskriminativen Einbettungen, die aus den Sprechersegmenten (225) extrahiert wurden, die in den entsprechenden Vorcluster geclustert wurden;
Durchführen von spektralem Clustern an den Schwerpunktwerten (265), die für die Zielanzahl von Vorclustern bestimmt wurden, um die Schwerpunktwerte (265) in k Klassen zu clustern; und
für jede jeweilige Klasse (262) der k Klassen, Zuweisen einer jeweiligen Sprecherbezeichnung (250) zu jedem Schwerpunktwert (265), der in die jeweilige Klasse (262) geclustert wurde, die sich von der jeweiligen Sprecherbezeichnung (250) unterscheidet, die den Schwerpunktwerten (265) zugewiesen wurde, die in jede andere Klasse (262) der k Klassen geclustert wurden.

2. Computerimplementiertes Verfahren (500) nach Anspruch 1, wobei die Operationen ferner Annotieren der Transkription (200) der Äußerungen (120) basierend auf der Sprecherbezeichnung (250), die jedem Schwerpunktwert (265) zugewiesen wurde, umfassen.

3. Computerimplementiertes Verfahren (500) nach Anspruch 1 oder 2, wobei die Operationen ferner Einstellen der Zielanzahl von Vorclustern gleich der Schwellenwertanzahl M umfassen.

4. Computerimplementiertes Verfahren (500) nach einem der Ansprüche 1-3, wobei die Zielanzahl von Vorclustern kleiner als die Anzahl von N Sprechersegmenten (225) ist.

5. Computerimplementiertes Verfahren (500) nach einem der Ansprüche 1-4, wobei die Operationen ferner umfassen:
für jedes Sprecherwechseltoken in dem einen oder den mehreren Sprecherwechseltoken (224), die als Ausgabe von dem Spracherkennungsmodell erzeugt wurden, Vorhersagen eines jeweiligen Konfidenzwerts (331) des jeweiligen Sprecherwechsels, der in der Transkription (200) detektiert wurde; und
Bestimmen, dass eine Schwellenwertanzahl des einen oder der mehreren Sprechertoken (224), die jeweils den jeweiligen Konfidenzwert (331) aufweisen, der einen Konfidenzwert(331)-Schwellenwert erfüllt, erfüllt ist,
wobei Segmentieren des Eingangsaudiosignals (122) in die Mehrzahl von N Sprechersegmenten (225) auf dem Bestimmen basiert, dass die Schwellenwertanzahl des einen oder der mehreren Sprechertoken (224), die jeweils den jeweiligen Konfidenzwert (331) aufweisen, der den Konfidenzwert(331)-Schwellenwert erfüllt, erfüllt ist.

6. Computerimplementiertes Verfahren (500) nach Anspruch 5, wobei die Operationen ferner umfassen:
Bestimmen von paarweisen Beschränkungen (226) basierend auf den Konfidenzwerten (331), die für die Sprecherwechseltoken (224) vorhergesagt wurden,
wobei das spektrale Clustern, das an den Schwerpunktwerten (265) durchgeführt wird, die für die Zielanzahl von Vorclustern bestimmt wurden, durch die paarweisen Beschränkungen (226) beschränkt ist.

7. Computerimplementiertes Verfahren (500) nach einem der Ansprüche 1-6, wobei:
jedes Sprecherwechseltoken in der Sequenz von Sprecherwechseltoken (224) einen entsprechenden Zeitstempel aufweist; und
Segmentieren des Eingangsaudiosignals (122) in die Mehrzahl von N Sprechersegmenten (225) basierend auf der Sequenz von Sprecherwechseltoken (224) Segmentieren des Eingangsaudiosignals (122) in anfängliche Sprechersegmente (225) umfasst, die jeweils durch die entsprechenden Zeitstempel (223) eines jeweiligen Paares von benachbarten Sprecherwechseltoken (224) in der Sequenz von Sprecherwechseltoken (224) begrenzt sind.

8. Computerimplementiertes Verfahren (500) nach Anspruch 7, wobei die Operationen ferner umfassen:
für jedes anfängliche Sprechersegment (225), das eine jeweilige Dauer aufweist, die einen Segmentdauerschwellenwert überschreitet, weiteres Segmentieren des anfänglichen Sprechersegments (225) in zwei oder mehr Sprechersegmente verringerter Dauer (225), die jeweilige Dauern aufweisen, die kleiner oder gleich dem Segmentdauerschwellenwert sind,
wobei die Mehrzahl von N Sprechersegmenten (225), die aus dem Eingangsaudiosignal (122) segmentiert wurden, umfasst:
die anfänglichen Sprechersegmente (225), die jeweilige Dauern aufweisen, die kleiner oder gleich dem Segmentdauerschwellenwert sind; und
die Sprechersegmente verringerter Dauer (225), die weiter aus beliebigen der anfänglichen Sprechersegmente (225) segmentiert wurden, die jeweilige Dauern aufweisen, die den Segmentdauerschwellenwert überschreiten.

9. Computerimplementiertes Verfahren (500) nach einem der Ansprüche 1-8, wobei Extrahieren der entsprechenden sprecherdiskriminativen Einbettung aus dem Sprechersegment (225) umfasst:
Empfangen des Sprechersegments (225) als Eingabe in ein Sprechercodierermodell (230); und
Erzeugen der entsprechenden sprecherdiskriminativen Einbettung als Ausgabe von dem Sprechercodierermodell (230).

10. Computerimplementiertes Verfahren (500) nach Anspruch 9, wobei das Sprechercodierermodell (230) ein auf Langzeit-Kurzzeitspeicher basierendes (LSTM-basiertes) Sprechercodierermodell (230) umfasst, das konfiguriert ist, die entsprechende sprecherdiskriminative Einbettung aus jedem Sprechersegment (225) zu extrahieren.

11. Computerimplementiertes Verfahren (500) nach einem der Ansprüche 1-10, wobei das Spracherkennungsmodell ein transducerbasiertes Streaming-Spracherkennungsmodell umfasst, umfassend:
einen Audiocodierer (310), der konfiguriert ist zum:
Empfangen, als Eingabe, einer Sequenz von akustischen Frames; und
Erzeugen, an jedem einer Mehrzahl von Zeitschritten, einer Merkmalsrepräsentation höherer Ordnung für einen entsprechenden akustischen Frame in der Sequenz von akustischen Frames;
einen Bezeichnungscodierer (320), der konfiguriert ist zum:
Empfangen, als Eingabe, einer Sequenz von Nicht-Leer-Symbolen, die von einer abschließenden Softmaxschicht (340) ausgegeben werden; und
Erzeugen, an jedem der Mehrzahl von Zeitschritten, einer dichten Repräsentation (322); und
ein gemeinsames Netzwerk (330), das konfiguriert ist zum:
Empfangen, als Eingabe, der von dem Audiocodierer (310) an jedem der Mehrzahl von Zeitschritten erzeugten Merkmalsrepräsentation höherer Ordnung und der von dem Bezeichnungscodierer (320) an jedem der Mehrzahl von Zeitschritten erzeugten dichten Repräsentation (322); und
Erzeugen, an jedem der Mehrzahl von Zeitschritten, einer Wahrscheinlichkeitsverteilung über mögliche Spracherkennungshypothesen (342) an dem entsprechenden Zeitschritt.

12. Computerimplementiertes Verfahren (500) nach Anspruch 11, wobei der Audiocodierer (310) ein neuronales Netzwerk umfasst, das eine Mehrzahl von Multi-Head-Attention-Schichten aufweist.

13. Computerimplementiertes Verfahren (500) nach Anspruch 11 oder 12, wobei der Bezeichnungscodierer (320) ein Bigramm-Einbettungs-Lookup-Decodermodell umfasst.

14. Computerimplementiertes Verfahren (500) nach einem der Ansprüche 1-13, wobei das Spracherkennungsmodell mit Trainingsbeispielen trainiert ist, die jeweils Trainingsäußerungen (120) umfassen, die von zwei oder mehr verschiedenen Sprechern gesprochen werden, gepaart mit einer entsprechenden Ground-Truth-Transkription (200) der Trainingsäußerungen (120), wobei jede Ground-Truth-Transkription (200) mit Ground-Truth-Sprecherwechseltoken (224) injiziert ist, die Stellen angeben, an denen Sprecherwechsel in der Ground-Truth-Transkription (200) auftreten; und optional,
wobei die entsprechende Ground-Truth-Transkription (200) jedes Trainingsbeispiels nicht mit Zeitstempelinformationen annotiert ist.

15. System (100), umfassend
Datenverarbeitungshardware (610);
Speicherhardware (620) in Kommunikation mit der Datenverarbeitungshardware (610), die Anweisungen speichert, die, wenn sie von der Datenverarbeitungshardware (610) ausgeführt werden, die Datenverarbeitungshardware (610) veranlassen, das Verfahren nach einem der vorhergehenden Ansprüche durchzuführen.

## Revendications

1. Procédé mis en œuvre par ordinateur (500) qui, lorsqu'il est exécuté sur un matériel de traitement de données (610), amène le matériel de traitement de données (610) à réaliser des opérations comprenant :
la réception d'un signal audio d'entrée (122) correspondant à des énoncés (120) prononcés par un ou plusieurs locuteurs, le signal audio d'entrée (122) comprenant N trames audio de longueur fixe ;
le traitement, à l'aide d'un modèle de reconnaissance vocale, du signal audio d'entrée (122) pour générer conjointement en sortie à partir du modèle de reconnaissance vocale :
une transcription (200) des énoncés (120) ; et
un ou plusieurs jetons de tour de parole (224) indiquant chacun un emplacement d'un tour de parole respectif détecté dans la transcription (200) entre une paire respective de termes adjacents (222) ;
la segmentation du signal audio d'entrée (122) en une pluralité de N segments de locuteur (225) sur la base du ou
des jetons de tour de parole (224) générés en sortie à partir du modèle de reconnaissance vocale ;
pour chaque segment de locuteur (225) de la pluralité de N segments de locuteur (225), l'extraction d'un plongement discriminant le locuteur correspondant à partir du segment de locuteur (225) ; et
sur la base de la détermination du fait qu'un nombre des N segments de locuteur (225) est supérieur à un nombre seuil M :
la réalisation d'un pré-regroupement sur les plongements discriminant le locuteur extraits de N segments de locuteur (225) pour regrouper les N segments de locuteur (225) en un nombre cible de pré-grappes ;
pour chaque pré-grappe correspondante parmi le nombre cible de pré-grappes, la détermination d'une valeur de centroïde respective (265) sur la base des plongements discriminant le locuteur extraits des segments de locuteur (225) regroupés dans la pré-grappe correspondante ;
la réalisation d'un regroupement spectral sur les valeurs de centroïdes (265) déterminées pour le nombre cible de pré-grappes afin de regrouper les valeurs de centroïdes (265) en k classes ; et
pour chaque classe respective (262) des k classes, l'attribution d'une étiquette de locuteur respective (250) à chaque valeur de centroïde (265) regroupée dans la classe respective (262) qui est différente de l'étiquette de locuteur respective (250) attribuée aux valeurs de centroïdes (265) regroupées dans chaque autre classe (262) des k classes.

2. Procédé mis en œuvre par ordinateur (500) selon la revendication 1, dans lequel les opérations comprennent en outre l'annotation de la transcription (200) des énoncés (120) sur la base de l'étiquette de locuteur (250) attribuée à chaque valeur de centroïde (265).

3. Procédé mis en œuvre par ordinateur (500) selon la revendication 1 ou 2, dans lequel les opérations comprennent en outre la définition du nombre cible de pré-grappes comme étant égal au nombre seuil M.

4. Procédé mis en œuvre par ordinateur (500) selon l'une quelconque des revendications 1 à 3, dans lequel le nombre cible de pré-grappes est inférieur au nombre de N segments de locuteur (225).

5. Procédé mis en œuvre par ordinateur (500) selon l'une quelconque des revendications 1 à 4, dans lequel les opérations comprennent en outre :
pour chaque jeton de tour de parole parmi le ou les jetons de tour de parole (224) générés en sortie à partir du modèle de reconnaissance vocale, la prédiction d'une valeur de confiance (331) respective du tour de parole respectif détecté dans la transcription (200) ; et
la détermination du fait qu'un nombre seuil du ou des jetons de locuteur (224) présentant chacun la valeur de confiance respective (331) satisfaisant à un seuil de valeur de confiance (331) est atteint,
dans lequel la segmentation du signal audio d'entrée (122) en la pluralité de N segments de locuteur (225) est basée sur la détermination du fait que le nombre seuil du ou des jetons de locuteur (224) présentant chacun la valeur de confiance respective (331) satisfaisant au seuil de valeur de confiance (331) est atteint.

6. Procédé mis en œuvre par ordinateur (500) selon la revendication 5, dans lequel les opérations comprennent en outre :
la détermination de contraintes par paires (226) sur la base des valeurs de confiance (331) prédites pour les jetons de tour de parole (224),
dans lequel le regroupement spectral réalisé sur les valeurs de centroïdes (265) déterminées pour le nombre cible de prégrappes est contraint par les contraintes par paires (226).

7. Procédé mis en œuvre par ordinateur (500) selon l'une quelconque des revendications 1 à 6, dans lequel :
chaque jeton de tour de parole dans la séquence de jetons de tour de parole (224) possède un horodatage correspondant ; et
la segmentation du signal audio d'entrée (122) en la pluralité de N segments de locuteur (225) sur la base de la séquence de jetons de tour de parole (224) comprend la segmentation du signal audio d'entrée (122) en segments de locuteur initiaux (225) chacun délimité par les horodatages correspondants (223) d'une paire respective de jetons de tour de parole adjacents (224) dans la séquence de jetons de tour de parole (224).

8. Procédé mis en œuvre par ordinateur (500) selon la revendication 7, dans lequel les opérations comprennent en outre :
pour chaque segment de locuteur initial (225) présentant une durée respective qui dépasse un seuil de durée de segment, la segmentation complémentaire du segment de locuteur initial (225) en deux ou plusieurs segments de locuteur de durée réduite (225) présentant des durées respectives inférieures ou égales au seuil de durée de segment,
dans lequel la pluralité de N segments de locuteur (225) segmentés à partir du signal audio d'entrée (122) comprend :
les segments de locuteur initiaux (225) présentant des durées respectives inférieures ou égales au seuil de durée de segment ; et
les segments de locuteur de durée réduite (225) issus de la segmentation complémentaire de l'un quelconque des segments de locuteur initiaux (225) présentant des durées respectives qui dépassent le seuil de durée de segment.

9. Procédé mis en œuvre par ordinateur (500) selon l'une quelconque des revendications 1 à 8, dans lequel l'extraction d'un plongement discriminant le locuteur correspondant à partir du segment de locuteur (225) comprend :
la réception, en entrée d'un modèle d'encodeur de locuteur (230), du segment de locuteur (225) ; et
la génération, en sortie du modèle d'encodeur de locuteur (230), du plongement discriminant le locuteur correspondant.

10. Procédé mis en œuvre par ordinateur (500) selon la revendication 9, dans lequel le modèle d'encodeur de locuteur (230) comprend un modèle d'encodeur de locuteur (230) basé sur une mémoire à long et court terme (LSTM) configuré pour extraire le plongement discriminant le locuteur correspondant de chaque segment de locuteur (225).

11. Procédé mis en œuvre par ordinateur (500) selon l'une quelconque des revendications 1 à 10, dans lequel le modèle de reconnaissance vocale comprend un modèle de reconnaissance vocale en flux continu basé sur un transducteur comprenant :
un encodeur audio (310) configuré pour :
recevoir, en entrée, une séquence de trames acoustiques ; et
générer, à chacun d'une pluralité de pas de temps, une représentation de caractéristiques d'ordre supérieur pour une trame acoustique correspondante dans la séquence de trames acoustiques ;
un encodeur d'étiquettes (320) configuré pour :
recevoir, en entrée, une séquence de symboles non vides délivrée en sortie par une couche softmax finale (340) ; et
générer, à chacun de la pluralité de pas de temps, une représentation dense (322) ; et
un réseau conjoint (330) configuré pour :
recevoir, en entrée, la représentation de caractéristiques d'ordre supérieur générée par l'encodeur audio (310) à chacun de la pluralité de pas de temps et la représentation dense (322) générée par l'encodeur d'étiquettes (320) à chacun de la pluralité de pas de temps ; et
générer, à chacun de la pluralité de pas de temps, une distribution de probabilité sur des hypothèses de reconnaissance vocale (342) possibles au pas de temps correspondant.

12. Procédé mis en œuvre par ordinateur (500) selon la revendication 11, dans lequel l'encodeur audio (310) comprend un réseau neuronal ayant une pluralité de couches d'attention multi-têtes.

13. Procédé mis en œuvre par ordinateur (500) selon la revendication 11 ou 12, dans lequel l'encodeur d'étiquettes (320) comprend un modèle décodeur à consultation de plongements de bigrammes.

14. Procédé mis en œuvre par ordinateur (500) selon l'une quelconque des revendications 1 à 13, dans lequel le modèle de reconnaissance vocale est entraîné sur des échantillons d'entraînement qui comprennent chacun des énoncés d'entraînement (120) prononcés par deux ou plusieurs locuteurs différents associés à une transcription de vérité terrain correspondante (200) des énoncés d'entraînement (120), chaque transcription de vérité terrain (200) étant injectée avec des jetons de tour de parole de vérité terrain (224) indiquant les emplacements où les tours de parole se produisent dans la transcription de vérité terrain (200) ; et éventuellement, dans lequel la transcription de vérité terrain correspondante (200) de chaque échantillon d'entraînement n'est annotée avec aucune information d'horodatage.

15. Système (100) comprenant
un matériel de traitement de données (610) ;
un matériel de mémoire (620) en communication avec le matériel de traitement de données (610) et stockant des instructions qui, lorsqu'elles sont exécutées par le matériel de traitement de données (610), amènent le matériel de traitement de données (610) à réaliser le procédé selon l'une quelconque des revendications précédentes.
